# EUROPÄISCHE PATENTSCHRIFT

(11) **EP 2 499 015 B1**
(45) Veröffentlichungstag und Bekanntmachung des Hinweises auf die Patenterteilung: **22.01.2020**
(21) Anmeldenummer: 10760298.9
(22) Anmeldetag: 22.09.2010
(51) Int. Cl.: B60L 58/25

(54) **VERFAHREN UND ANORDNUNG ZUM BETRIEB VON FAHRZEUGEN MIT ELEKTRISCHEM ANTRIEB SOWIE EIN ENTSPRECHENDES COMPUTERPROGRAMM UND EIN ENTSPRECHENDES COMPUTERLESBARES SPEICHERMEDIUM**
METHOD AND ASSEMBLY FOR OPERATING VEHICLES HAVING AN ELECTRICAL DRIVE AND A CORRESPONDING COMPUTER PROGRAM AND A CORRESPONDING COMPUTER-READABLE STORAGE MEDIUM
PROCÉDÉ ET DISPOSITIF POUR FAIRE FONCTIONNER DES VÉHICULES À ENTRAÎNEMENT ÉLECTRIQUE, PROGRAMME D'ORDINATEUR CORRESPONDANT ET SUPPORT DE STOCKAGE LISIBLE PAR ORDINATEUR CORRESPONDANT

(30) Priorität: 10.11.2009 DE 102009046568
(43) Veröffentlichungstag der Anmeldung: 19.09.2012
(73) Patentinhaber: Samsung SDI Co., Ltd., Gyeonggi-do (KR); Robert Bosch GmbH, 70442 Stuttgart (DE)
(72) Erfinder: YAN, Xiaofeng, 71384 Weinstadt (DE)
(74) Vertreter: Bee, Joachim
(86) Internationale Anmeldenummer: PCT/EP2010/063984
(87) Internationale Veröffentlichungsnummer: WO 2011/057847

(56) Entgegenhaltungen:
- EP-A1- 1 876 051
- EP-A2- 1 256 476
- DE-A1- 10 226 143
- DE-A1- 10 226 143
- DE-A1-102006 033 930

## Beschreibung

Die Erfindung betrifft ein Verfahren und eine Anordnung zum Betrieb von Fahrzeugen mit elektrischem Antrieb sowie ein entsprechendes Computerprogramm und ein entsprechendes computerlesbares Speichermedium, welche insbesondere einsetzbar sind, um intelligente Regelungsstrategien für den elektrischen Antrieb und eine intelligente Temperaturregelung von Traktionsbatterien, wie z.B. Li-Ionen-Batterien, in Kraftfahrzeugen bereitzustellen.

### Stand der Technik

Eine Li-lonen Batterie ist ein wiederaufladbarer elektrischer Energiespeicher, der einen breiten Einsatz in Handys, Laptops, tragbaren Konsumgeräten usw. findet. In der automobilen Anwendung stellen Li-Ionen-Batterien eine Schlüsseltechnologie für die Elektrifizierung des Antriebssystems dar. Je nach Kundenanforderung können unterschiedliche Lösungen erarbeitet werden, z.B. in Hybridfahrzeugen (engl.: HEV) ist eine Teilelektrifizierung realisiert, und in (rein) elektrischen Fahrzeugen (engl.: DV) werden 100 % elektrische Energie aus Li-lonen-Batterien genutzt. Die Li-Ionen-Batterien können dabei je nach Einsatzspezifikationen modular aufgebaut werden und sind seriell oder parallel elektrisch verschaltet.

Ein wesentlicher Aspekt für eine erfolgreiche Etablierung dieser Technologie ist u.a. die Betriebssicherheit von Li-Ionen Batterien. Dabei ist es erforderlich, die Batterie innerhalb eines optimalen Temperaturbereichs zu betreiben. Denn die Batterietemperatur hat einen großen Einfluss auf die Leistungsbereitstellung, Alterung (Leistungsminderung) bzw. Lebensdauer und Betriebssicherheit (Brandgefahr). Daraus ergibt sich, dass ein wohlüberlegtes thermisches Management-Konzept unabdingbar ist für die Verwendung von Li-Ionen Batterie im Fahrzeug.
Für automobile Anwendung ist es wichtig, die Li-Ionen Batterien vor einer Überhitzung zu schützen sowie eine Unterkühlung zu vermeiden. Dafür sorgt ein Thermomanagement-System durch notwendige Temperaturmessung bzw. -überwachung und eine effektive Gegensteuerung.

Ein wichtiger Aspekt für Elektrofahrzeuge und Hybridfahrzeuge ist ein effizientes Energiemanagement, welches den Umgang von elektrischen Verbrauchern (dazu gehören z.B. E-Maschine, Batterie Managementsystem usw.) mit der in der Li-Ionen-Batterie gespeicherten elektrochemischen Energie. Dies beeinflusst entscheidend die Reichweite (EV) bzw. den Spritverbrauch (HEV).

Der Aufbau eines Li-Ion-Batteriesystems erfolgt meistens nach dem Baukastenprinzip, die Batteriezellen werden nebeneinander in Reihe mechanisch zusammengehalten und elektrisch in Reihe geschaltet, die Zellen werden in einem Gehäuse untergebracht und nach außen elektrisch isoliert und geschlossen (ggf. gedichtet). Hier kann die sogenannte modulare Bauweise eingesetzt werden: eine bestimmte Anzahl von Batterien bilden einen Modul und besitzen eine eigene elektrische Schaltung und Kühlungs-, Messungs-/Überwachungs- und Sicherheitseinheiten.

Bekannt sind Batterie-Management-Systeme (BMS). Ein BMS ist die Steuer- und Regeleinheit für das Batteriesystem und normalerweise direkt im Batteriegehäuse integriert.

Für die Kühlung des Batteriesystems werden zurzeit unterschiedliche Medien wie Luft, Kühlwasser oder Kältemittel eingesetzt, die die Wärme der Batterien aufnehmen und nach außen abführen.

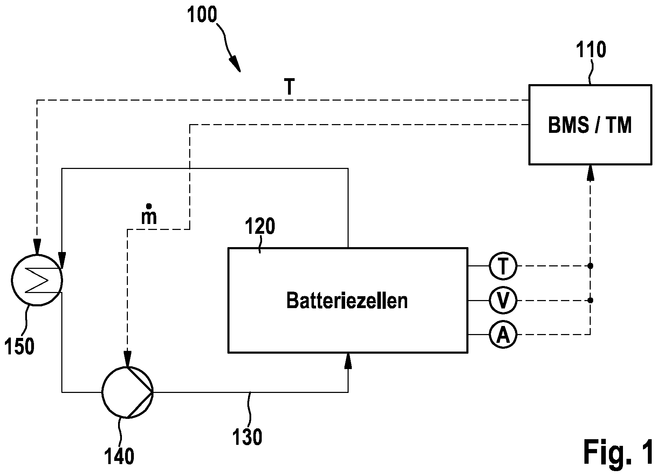

Der prinzipielle Aufbau eines Li-Ionen-Batteriesystems 100 mit den Funktionseinheiten Temperaturmanagement (TM) und BMS 110 ist in Fig. 1 dargestellt. Die Funktionseinheit Temperaturmanagement (TM) kümmert sich um den Wärmehaushalt der Batterien 120 und ist eine integrale Funktionseinheit innerhalb des BMS 110. Je nach Anforderung sorgt das TM für entsprechende Aufheizung oder Kühlung. Dies geschieht in zwei Schritten, zuerst werden die Zelltemperaturen gemessen und analysiert, das TM entscheidet dann, ob eine Heizung oder Kühlung notwendig ist, im zweiten Schritt wird ein Steuerorgan im Kühlkreislauf 130 direkt angesteuert, um den erforderlichen Massen/Volumenstrom des Kühlmediums einzustellen. Das Steuerorgan ist z.B. im Kühlwasserkreislauf 130 die elektrische Pumpe 140 oder im Fall einer direkten Kältemittelkühlung ein thermisches Expansionsventil. Die Steuerung ist normalerweise durch einfache "2-Punkt-Regelung", d.h. eine Taktung von Ein- und Ausschaltung des Steuerorgans realisiert. Bedarfsweise wird das Kühlwasser durch Aktivierung der Pumpe 140 durch einen Kühler 150 gepumpt.

Für eine Ansteuerung von Antriebskomponenten in Hybridfahrzeugen wird u.a. in der Patentschrift DE 102 26 143 B4 vorgeschlagen, wenigstens eine der Antriebskomponenten in Abhängigkeit einer Fahrbetriebsstrategie automatisch zu aktivieren bzw. zu deaktivieren, wobei die Fahrbetriebsstrategie Energieprofile von Fahrstrecken berücksichtigt.

In der Veröffentlichung DE 10 2006 033 930 A1 wird vorgeschlagen, Verbrennungsmotor und elektrische Maschine eines Hybridantriebs eines Fahrzeugs in Abhängigkeit von Betriebsparametern zu betrieben, wobei die Betriebsparameter aus ermittelten Fahrprofilen gewonnen werden. Weiter wird vorgeschlagen, dass dabei Fahrprofile durch ein lernfähiges Verfahren aktualisiert werden können.

Die Veröffentlichung EP 1 876 051 A1 offenbart eine thermische Kontrolle von elektrischen Speichereinheiten. Es wird dazu vorgeschlagen, Temperaturschwellenwerte, welche eine Aktivierung/Deaktivierung eines Kühlsystems für die elektrischen Speichereinheiten steuern, anhand von einer vorhersagbaren Temperatur der elektrischen Speichereinheit zu verändern. Insbesondere ist vorgesehen, die Temperatur aus den künftigen Fahrtstreckeneigenschaften vorherzusagen, wobei die künftigen Fahrtstreckeneigenschaften mit Hilfe eines Navigationssystems ermittelt werden.

Für zukünftige Elektrofahrzeuge ist nicht nur die Leistung von Energiespeichern Li-Ionen-Batterien ein wichtiger Aspekt, sondern auch ganz wesentlich die Betriebsstrategie, das Energiemanagement (Effizienz der Energienutzung, Reichweise, ...), der Komfort, die Lebensdauer, die Kosten und nicht zuletzt die Sicherheit der Li-Ionen-Batterie.

In dieser Hinsicht stellen die herkömmlichen Systeme nur unzureichende Lösungen dar.

### Offenbarung der Erfindung

Es ist daher Aufgabe der Erfindung, ein Verfahren und eine Anordnung zum Betrieb von Fahrzeugen mit elektrischem Antrieb sowie ein entsprechendes Computerprogramm und ein entsprechendes computerlesbares Speichermedium bereitzustellen, welche die Nachteile der bekannten Lösungen vermeiden und insbesondere einen intelligenten, vorausschauenden Betrieb von Energiespeichern in Kraftfahrzeugen gewährleisten.

Gelöst wird diese Aufgabe gemäß den unabhängigen Ansprüchen. Vorteilhafte Ausgestaltungen der Erfindung ergeben sich aus den anhängigen Ansprüchen.

Ein besonderer Vorteil der Erfindung besteht darin, dass durch den erfindungsgemäßen Betrieb des Kraftfahrzeugs die Effizienz der Energienutzung erhöht und die Lebensdauer des Energiespeichers, wie z.B. einer Traktionsbatterie, verlängert wird. Dies wird dadurch erreicht, dass für den elektrischen Antrieb des Kraftfahrzeugs Regelungsstrategien verwendet werden, die die Fahrtstrecke berücksichtigen, die zurückgelegt werden soll. Bei Kraftfahrzeug kann es sich beispielsweise um ein Hybridfahrzeug oder um ein elektrisches Fahrzeug handeln. Insbesondere bietet die Erfindung den Vorteil gegenüber herkömmlichen Lösungen, dass der elektrische Antrieb selbst durch die fahrstreckenabhängige Regelungsstrategie betrieben wird, und nicht lediglich eine Auswahl zwischen einer Verbrennungsmaschine und einer Elektromaschine getroffen wird. Die zurückzulegende Fahrstrecke kann beispielsweise durch Zieleingabe in ein Navigationsgerät ermittelt und einem Steuersystem zum Betrieb des mindestens einen Energiespeichers zur Verfügung gestellt wird.

Eine bevorzugte Ausführungsform der Erfindung sieht vor, dass der Betrieb des Energiespeichers auch ein Temperaturmanagement für den Energiespeicher umfasst. Anhand der Parameter der zurückzulegenden Fahrstrecke werden erfindungsgemäß Lastprofile ermittelt, die angeben, welche Antriebsenergie zu welchem Zeitpunkt bereitgestellt werden muss. Auf diese für eine bestimmte Strecke und/oder für einen bestimmten Fahrer vorhergesagten Lastprofile werden die Regelungsstrategien abgestimmt. Anhand der Lastprofile kann auch die zu einem bestimmten Zeitpunkt benötigte Antriebsenergie, d.h. die Belastung des (der) Energiespeicher(s) des Fahrzeugs im voraus ermittelt werden. Diese Kenntnisse über die voraussichtliche Fahrdynamik werden erfindungsgemäß für ein Temperaturmanagement des (der) Energiespeicher(s) genutzt. Insbesondere kann die Kenntnis von Lastspitzen, die eine starke Temperaturerhöhung bewirken, so dass die Gefahr einer Überhitzung besteht, genutzt werden, um vorausschauend Vorkühlung des (der) Energiespeicher(s) ausgeführt werden. Desgleichen kann eine Nachkühlung vorgesehen werden, beispielsweise nach einer starken Erwärmung des (der) Energiespeicher(s). Vor- und Nachkühlung können natürlich auch miteinander kombiniert werden bzw. ineinander übergehen.

Als vorteilhaft erweist es sich, dass ein Sampling von Lastprofilen durchgeführt wird. In Auswertung des Samplings werden einzelne spezielle Lastmodule für bestimmte, vorgebbare Fahrsituationen wie z.B. Start, Überholen, Bremsen, Stop & Go o.dgl. erstellt. Anhand des Fahrprofils der zurückzulegenden Strecke werden unter Verwendung der Lastmodule Lastprofile für zumindest einen Teil der zurückzulegenden Strecke zusammengestellt. Antriebsenergie kann so frühzeitig und vorausschauend bereitgestellt werden.

Es erweist sich weiter als vorteilhaft, dass für zumindest einen Teil der speziellen Lastmodule auch modulare Temperaturregelungsalgorithmen, wie Kühlungs- oder Heizungsregelungsalgorithmen, bereitgestellt werden. Auf diese Weise werden optimale Temperaturverhältnisse für die zusammengestellten Fahrzyklen generiert.

Eine Anordnung nach der Erfindung weist mindestens einen Chip und/oder Prozessor auf, der (die) derart eingerichtet ist (sind), dass ein Verfahren zum Betrieb von Fahrzeugen mit elektrischem Antrieb ausführbar ist, wobei der elektrische Antrieb mit einer von einer zurückzulegenden Fahrtstrecke abhängigen Regelungsstrategie betrieben wird.

Ein Computerprogramm zum Betrieb von Fahrzeugen mit elektrischem Antrieb ermöglicht es einer Datenverarbeitungseinrichtung, nachdem es in den Speicher der Datenverarbeitungseinrichtung geladen worden ist, ein Betriebsverfahren durchzuführen, wobei der elektrische Antrieb mit einer von einer zurückzulegenden Fahrtstrecke abhängigen Regelungsstrategie betrieben wird.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 8 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zum Betrieb von Fahrzeugen mit elektrischem Antrieb durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zum Betrieb von Fahrzeugen mit elektrischem Antrieb durchzuführen, wobei der elektrische Antrieb mit einer von einer zurückzulegenden Fahrtstrecke abhängigen Regelungsstrategie betrieben wird.

Die Erfindung gemäß dem unabhängigen Verfahrensanspruch betrifft eine intelligente Betriebs- und TM-Regelungsstrategie für Fahrzeuge mit elektrischem Antrieb. Die Erfindung stellt Maßnahmen bereit, die das elektrische Fahren und die damit erforderliche Regelung für TM intelligenter machen, um mehr Sicherheit, mehr Energieeffizienz, längere Batterie- und Komponentenlebensdauer und stärkere Wettbewerberdifferenzierung zu erzielen.

Die intelligente Betriebsstrategie und darauf aufgebaute thermische Regelungsstrategie zeichnen sich insbesondere durch folgende Merkmale aus:
- es werden kundentypische Fahrgewohnheiten gespeichert und analysiert, auf die eine spezielle Regelungsstrategie für den Antrieb und das thermische Management der Batterien abgestimmt wird;
- es wird eine Fahrdynamikvorhersage (Fahrdynamik Prediktor) bereitgestellt;
- die Erfindung zeichnet sich durch eine selbstlernfähige Arbeitsweise aus;
- es wird ein Sampling von Lastprofilen und eine Erstellung von Lastmodulen ausgeführt;
- es werden Fahrzyklen aus Kombination von Lastmodulen erstellt;
- Antriebsenergie wird frühzeitig und vorausschauend bereitgestellt;
- es werden Antriebsstrategien als eine Empfehlung (Vorzeiger-Strategie) für den Fahrer angeboten, die an bestimmte, spezielle Situationen angepasst sind;
- modulare Kühlungs- oder Heizungsregelungsalgorithmen für typische Lastmodule/Fahrprofile, wie Start, Überholen, Bremsen, o.dgl., werden aufgebaut;
- optimale Heizung/Kühlung für zusammengestellte Fahrzyklen werden generiert;
- intelligente Kühlungsstrategie inkl. Vorheizung, Vorkühlung, Nachkühlung werden integriert.

Die intelligente Betriebs- und Regelungsstrategie bringt eine Reihe weiterer Vorteilen mit sich:
- vorausschauendes Agieren für Antrieb und Thermomanagement;
- Ermöglichung längerer Lebensdauer, höherer Energieeffizienz und höherer Sicherheit durch ein verbessertes TM-Konzept;
- es werden Differenzierungsmerkmale zu Wettbewerbern geschaffen, da Auslegungsziele für die Regelung und die Implementierung individuell markenspezifisch konstruier werden können.

Die Erfindung soll nachfolgend unter Bezugnahme auf die Figuren der Zeichnungen an einem Ausführungsbeispiel näher erläutert werden. Es zeigen:
Fig. 1 den prinzipiellen Aufbau eines Li-Ionen-Batteriesystems mit einem Kühlkreislauf aus Kühlwasser und BMS,
Fig. 2 die prinzipielle Funktionsweise eines beispielhaften Li-Ionen-Batteriesystems,
Fig. 3 ein beispielhaftes Sampling von Fahrprofil und Identifikation von modularen Lastblöcken,
Fig. 4 eine Veranschaulichung des Temperaturverlaufs mit Pumpenscharakteristik bei einer "2-Punkt-Regelung",
Fig. 5 eine Prinzipskizze für die Anwendung einer Vorkühlung mit einem Vergleich des Temperaturverlaufs mit einer konventionellen "2-Punkt-Regelung", und
Fig. 6 eine Prinzipdarstellung einer intelligenten Thermomanagement-Regulierungsstrategie für ein Li-Ionen-Batteriesystem.

Im Folgenden soll die Erfindung beispielhaft an dem Spezialfall eines beispielhaften Li-lonen-Batteriesystems in größerem Detail erläutert werden. Dabei ist zu berücksichtigen, dass die Erfindung nicht auf das im folgenden beschriebene Ausführungsbeispiel eingeschränkt ist, sondern vielmehr auch andere Verfahren, Anordnungen, Computerprogramme und computerlesbare Speichermedien zum Betrieb von Fahrzeugen mit elektrischem Antrieb einschließt, die andere Komponenten verwenden oder deren Komponenten auf andere Weise miteinander kombiniert sind, solange sie nur die erfindungsgemäßen Merkmale realisieren.

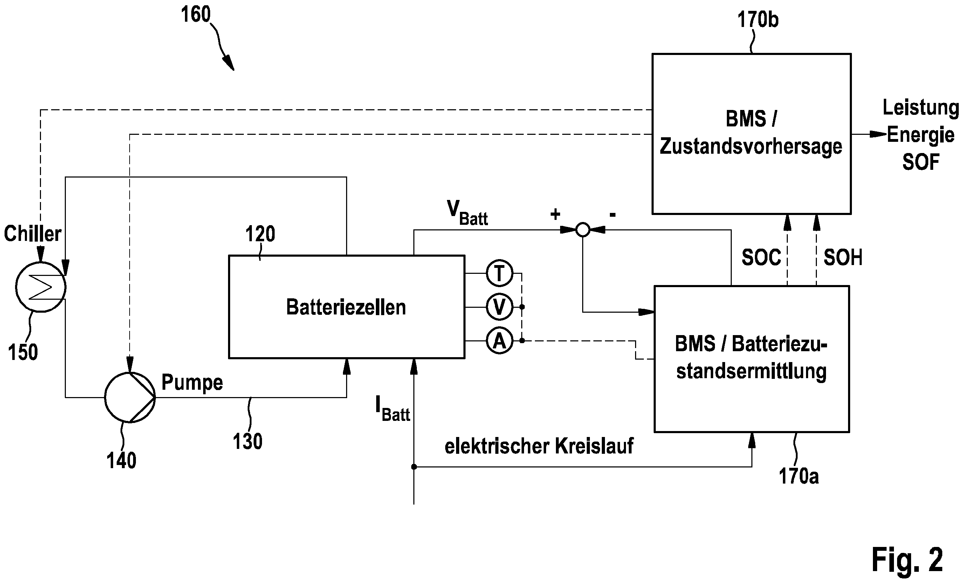

Figur 2 zeigt die prinzipielle Funktionsweise eines beispielhaften BMS 160 nach der Erfindung. Von einem herkömmlichen Li-Ionen-Batteriesystem (wie in Fig. 1 veranschaulicht) unterscheidet sich das beispielhafte Li-Ionen-Batteriesystem 160 dadurch, dass die Pumpe 140 nicht mehr durch das BMS 110 angesteuert wird, welches den Batteriezustand ermittelt, sondern durch eine Einheit 170 zur Vorhersage des Batteriezustandes. Die Einheit170 zur Vorhersage des Batteriezustandes erhält von dem BMS 110 Informationen über den aktuellen Batteriezustand (wie beispielsweise Ladezustand [SOC], Alterungszustand [SOH] o.dgl.), die die Einheit170 zur Vorhersage des Batteriezustandes zusammen mit den Angaben über die zurückzulegende Fahrstrecke auswertet und daraus den Zustand der Batterie 120 für einen vorgebbaren, in der Zukunft liegenden Zeitraum vorhersagt und die entsprechende Antriebsenergie bereitstellt. Ggf. können auch Angaben zur Leistungsfähigkeit (SOF) der Batterie durch die Einheit170 zur Vorhersage des Batteriezustandes zur Verfügung gestellt werden.

Die intelligente Betriebs- und TM-Regelungsstrategie ist anwendbar auf alle Kühlkonzepte wie Luft-, Kühlwasser oder Kältemittelkühlung.

### Intelligente Betriebsstrategie:

In einem Elektro-Fahrzeug sorgt das Antriebsmanagement-System dafür, dass die vom Fahrer vorgegebenen Fahrbefehle ausgeführt werden, indem der E-Maschine die für die Fahrbefehle erforderliche Energie bereitgestellt und die E-Maschine mit entsprechender Drehzahl und Drehmoment gesteuert wird (analog zu einem Motor-Management-System). Dafür beinhaltet das Antriebsmanagement-System viele Funktionen, um die Regelungsstrategie, Diagnose, Überwachung usw. festlegen.

Die intelligente Betriebsstrategie stellt eine Erweiterung der Funktionalitäten im Antriebsmanagement-System dar. Sie basiert auf einer Analyse der fahrerspezifischen Fahrprofile durch Selbstlernfähigkeit und erlaubt eine optimale, maßgeschneiderte Betriebslösung.

Eine intelligente Betriebsstrategie weist beispielsweise folgenden Funktionsumfang auf:
Erfassung von kundentypischen Fahrprofilen:
Fahrinformationen wie zurückgelegte Strecke, Fahrdynamik, Dauer werden mit einer geeigneten Abtastungsrate erfasst und in einer kompakten Form abgespeichert.

Ein intelligenter Algorithmus analysiert daraus die kundenspezifischen Fahrprofile und lernt somit die Fahrgewohnheiten des Fahrers kennen.
Bei den relevanten Fahrinformationen handelt es sich beispielsweise um:
- Fahrstrecke(n) mit notwendiger Detailtiefe wie Art der Verkehrsstraße (Stadtstraße, Autobahn), Straßenneigung, Abstand. Hierfür ist in einer bevorzugten Ausführungsform eine Kommunikation zum Navigationssystem vorgesehen.
- Lastprofil der Li-Ionen Batterie (zeitliche Entladung, Ladung).

Daraus werden als Betriebsinformationen u.a. typische Fahrstrecken (z.B. tägliche Fahrten vom Wohnort zur Arbeitsstätte, Einkaufstour usw.) abgeleitet, die statistisch als "typisch" erkannt werden. Daraus kann ein Straßenbewertungsindex definiert werden. Typische Fahrdynamik (Beschleunigung, Bremse, zügiges Fahren), die zur Fahrstrecke zugehört, wird ebenfalls berücksichtigt.

Als vorteilhaft für die Auslegung des Algorithmus erweist es sich, dass ein aus der Regelungstechnik bekanntes neuronales Netz zugrunde gelegt wird. Damit wird der Algorithmus selbstlernfähig.

### Analyse des kundentypischen Fahrprofils

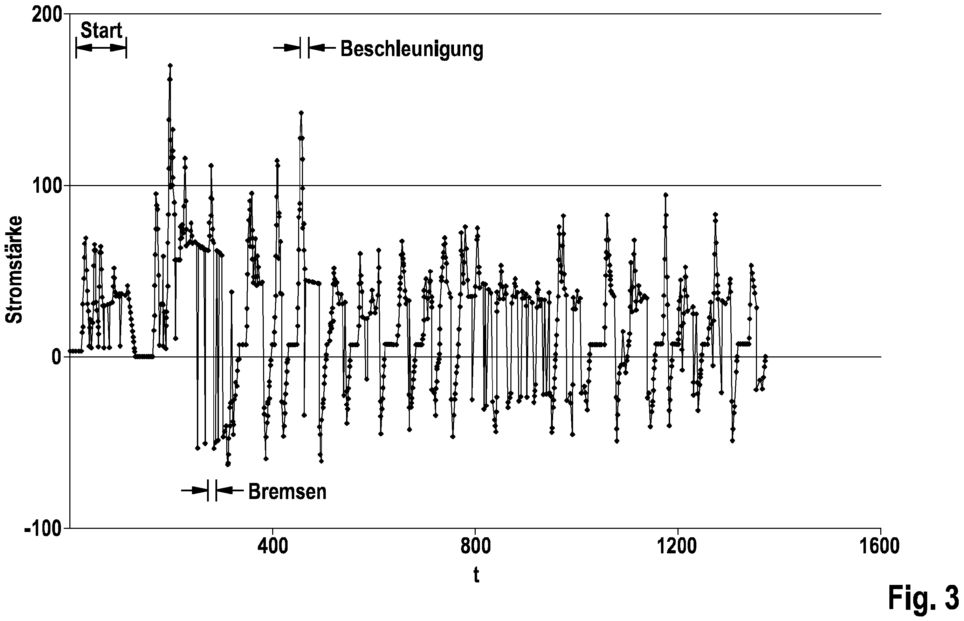

In einer beispielhaften Ausführungsform der Erfindung ist eine Aufteilung von Lastprofilen auf modulare Lastblöcke (Start, Beschleunigung, Bremsen, Stopp & Go, ...) vorgesehen (vgl. Fig. 3). Die Speicherung der Daten wie Fahrgeschwindigkeit, Beschleunigung, elektrische Leistung und Dauer sowie Straßenindex erfolgt im allgemeinen in ms-Takten. Um Speicherbedarf zu minimieren, sind für die modularen Lastblöcke in einer beispielhaften Ausführungsform nur zeitgemittelte Größe als Zahlenwert abgespeichert (keine genaue Aufnahme in ms nötig). Diese Informationen bilden eine "Kennfeld"-Bibliothek für die Antriebs- und Temperaturmanagementaufgaben.

Diese Modularisierung von Lastprofilen kann mit einer Sitzpositionserkennung für unterschiedliche Fahrer/innen kombiniert bzw. aktiviert werden. Weiterhin besteht die Möglichkeit, die kundenspezifische Analyse auch optional durch den Kunden bei Bedarf zu aktivieren. Dies kann aus Gründen des Produktdesigns (High-Variante als Design-Merkmal) oder aus Rücksicht auf praktische Anwendungen mit häufigem Fahrerwechsel (Autovermietung) vorgesehen werden.

### Intelligente Antriebsregelung durch Fahrdynamik Prediktor

Die Erfindung sieht eine Einheit zur Vorhersage der Fahrdynamik vor (Fahrdynamik-Prediktor): Mit dem Fahrdynamik-Prediktor ist eine frühe Erkennung von kundentypischen Fahrprofilen möglich. Der Fahrdynamik-Prediktor ordnet die Fahrprofile den jeweiligen entsprechenden Lastmodulen zu. Der Fahrdynamik-Prediktor ist in der Lage, real ermittelte Profile mit standardisierten, ab Werk voreingestellten Profilen abzugleichen (diese können wiederum vom Hersteller markentypisch ermittelt werden und in Speichern eingespielt/geflasht werden). Ein Fahrzyklus kann damit aus mehreren Lastmodulen analog "Lego-Bausteinen" zusammengesetzt werden.

In einer beispielhaften Ausführungsform der Erfindung ist eine Kommunikationsverbindung zwischen Fahrdynamik-Prediktor und einem Navigationssystem vorgesehen. Durch Zieleingabe in das Navigationssystem kann die Fahrstrecke mit Fahrgewohnheiten eines Kunden simuliert werden. Damit lassen sich beliebig genaue Aufteilung von Fahrstrecke in Teilstrecken mit zugehörigem Straßenbewertungsindex realisieren und kundenspezifisches Lastprofil zusammensetzen und vorausrechnen.

Die Erfindung ermöglicht eine frühzeitige, vorausschauende Bereitstellung von Antriebsenergie. Die intelligente Antriebsregelung führt in einer beispielhaften Ausführungsform einen Abgleich mit Energiereservoirs (Batterie SOC aus BMS) durch und liefert dem Fahrer bei Energiemangel ein Feedback, wie weit der Fahrer noch fahren kann. Optional kann dies mit einem Navigationssystem kombiniert werden, um die nächste Stromtankstelle aufzufinden und dem Fahrer mitzuteilen.

In Abhängigkeit der vorhergesagten Fahrstrecke können spezielle vorausschauende, energieeffiziente Regelungsstrategien vorgesehen sein.

Eine andere beispielhafte Ausführungsform sieht eine Vorausschau-Strategie (Schnittstelle Menschen-Maschinen) vor. Die Vorausschau-Strategie liefert und zeigt stets eine der Situation angepasste, vorausschauende optimale Antriebsstrategie an als eine Empfehlung/Orientierung für den Fahrer.

In kritischen Fällen, z.B. bei niedrigem Ladestend der Li-Ionen-Baterie, wechselt das Antriebsmanagement-System, vorzugsweise automatisch, in einen Energiesparmodus bis die Ladestation erreicht wird.

Durch Berücksichtigung von Fuzzy-Logic und neuronalen Netzen für den Regler-Entwurf wird erreicht, dass die intelligente Antriebsregelung selbstlernende Eigenschaften erhält.

### Intelligente, modulare Kühlungsstrategie:

Gemäß der intelligenten, modularen Kühlungsstrategie wird für jedes Lastmodul je nach elektrischer Leistung und Zeitdauer die entsprechende optimale Kühlleistung bestimmt. Für die Regelungsstrategie können weitere Einflussfaktoren wie z.B. die optimale Betriebstemperatur bzw. das Temperaturintervall (zur Einhaltung von max. Lebensdauer), die thermische Systemträgheit usw. berücksichtigt werden.

Gemäß einer beispielhaften Regelungsstrategie wird jedem Lastmodul ein berechnetes Kühlmodul bzw. Heizmodul zugeordnet, die standardmäßig als Bibliothek in BMS-Speichern abgelegt werden. Sobald vom Antriebsmanagement-System eine Früherkennung der Fahrprofils (Lastprofils) erkannt und an BMS mitgeteilt wurde, ruft das BMS das entsprechende Kühlmodul ab. Somit ist eine auf Lastmodule optimierte Kühlungsregelung möglich.

Lastmodule können wiederum zu einem typischen Fahrzyklus kombiniert und erkannt werden (z.B. tägliches Pendeln von Wohnung zur Arbeitsstätte), somit ist eine optimierte Kühlungsstrategie modulübergreifend oder gesamthaft möglich: Hier werden nicht nur einzelne Kühlmodule berücksichtigt, sondern auch vor- und nachgeschaltete Kühlmodule in Kombination analysiert. Es wird beispielsweise überprüft, wo ist die Spitzenleistung auftritt und wie lange sie anhält. Vorzugsweise wird dabei ermittelt, ob diese Wärmeproduktion sofort kompensiert werden muss oder durch nachfolgendes "sanftes" Fahren allein abgekühlt werden kann. Als Resultat wird aus allen oben genannten Fragestellungen logisch entscheiden, ob die Kühlung von einem Kühlmodul doch umgesetzt wird oder nicht.

Da der Kühlungsbedarf vorausschauend über längere Zeit hinaus geprüft wird, kann eine zu häufige Taktung "Ein- und Ausschaltung" vermieden werden, die bei einer passive Reaktion auf Eingangstemperatur bei "2-Punkt-Regelung" vorkommen kann. Somit schont die intelligente Regelung die ausführenden Komponenten und verringert Verschleiß oder Ausfall und Gewährleistungskosten.

Die vorgesehenen modularen Kühlungs- oder Heizungsregelungsalgorithmen werden in einer beispielhaften Ausführungsform für typische Fahrprofile, wie etwa Start, Überholen, Bremsen, o.dgl. angelegt. Dabei werden vorzugsweise abgelegte Fahrinformationen (abgelegte Strecke, Fahrdynamik, ...) als Referenz genutzt. Vorzugsweise erfolgt eine Aufnahme der Fahrrouten via Navigationssysteme (Strecke, Neigung, ..., Autobahn, Normalstraße). Durch die erfindungsgemäßen Maßnahmen wird ein besseres TM-Konzept und damit eine längere Lebensdauer und mehr Sicherheit des Systems ermöglicht (Precooling, Preheating, ...). Darüber hinaus werden Differenzierungsmerkmale zu Wettbewerberprodukten geschaffen.

### TM-Strategie Vorkühlung (Precooling):

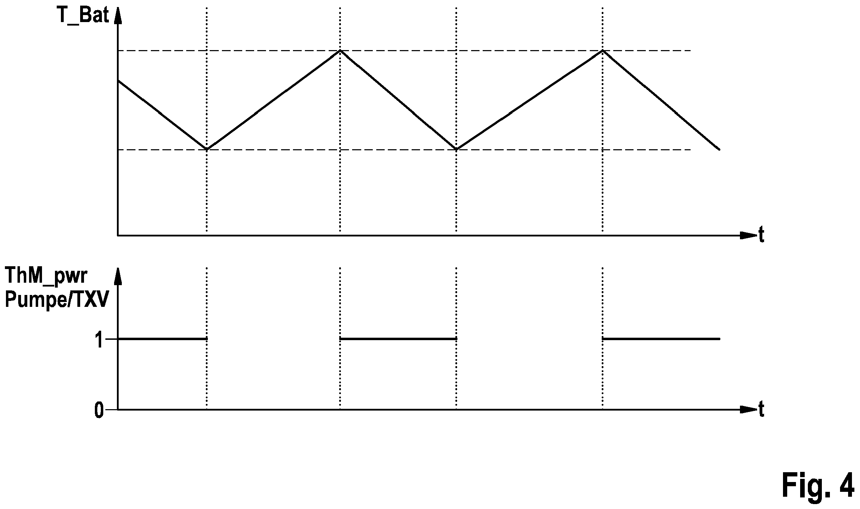

Eine herkömmliche "2-Punkt-Regelung" überprüft Kühlungsbedarf t nur "just in time", d.h. der Regler nimmt die gemessene Batterietemperatur und prüft, ob ein vordefinierter Schwellenwert überschritten wird (Kühlung wird benötigt). Wenn dies der Fall ist, dann übergibt das BMS ein Steuersignal an die Pumpe, und die Pumpe schaltet sich ein mit max. Leistung, solange bis der untere Schwellenwert erreicht wird (kein Kühlungsbedarf mehr). Das BMS sendet dann kein Signal mehr und die Pumpe wird ausgeschaltet (vgl. Fig. 4).

Diese herkömmliche Regelungsstrategie "2-Punkt-Regelung" reagiert nur auf die aktuell gemessene Batterietemperatur. Um die thermische Systemträgheit zu berücksichtigen, d.h. um zu berücksichtigen dass die Kühlung erst nach einer Verzögerung angreift und inzwischen die Zellen sich weiter erwärmen können, müssen die zwei Schwellenwerte eng zueinander ausgelegt werden. Dies schränkt die Betriebsflexibilität ein, und die Pumpe muss häufiger getaktet werden.

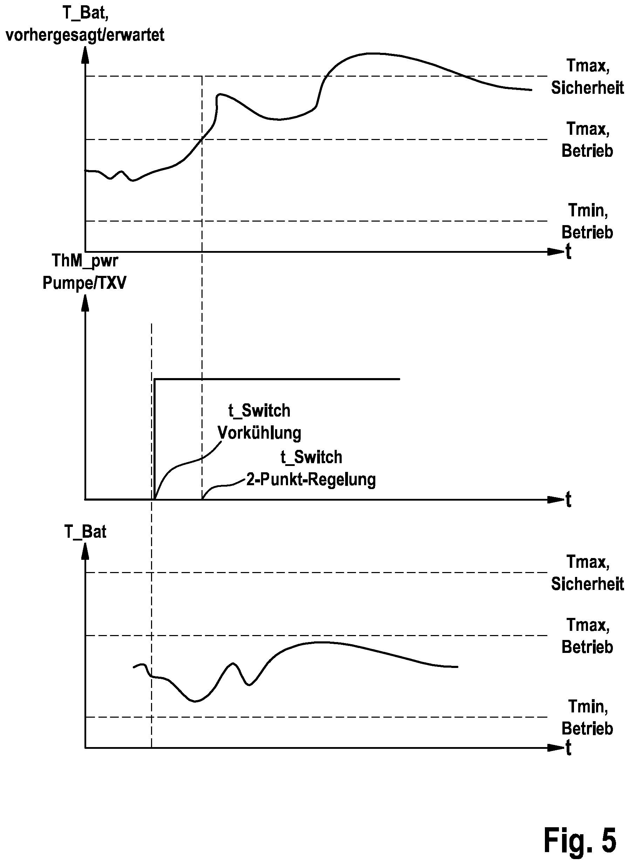

Ein weiterer kritischer Punkt ist, wenn die Batterie trotz Kühlung auf einem hohen Temperaturniveau liegt (Sommerbetrieb) und eine Reihe von Lastspitze (Beschleunigung-Bremse) abliefert. In einem solchen Fall kann es zu einer Überhitzung über die maximal zulässige Temperatur führen, die sich auch mit stationärem Pumpenbetrieb (maximale Kühlleistung) nicht verhindern lässt (die oberste T-Kurve in Fig. 5). Konventionelle Abhilfe wäre es, die Kühlleistung noch größer zu dimensionieren. Dies bedeutet größere Pumpe, dickere Rohrleitung, was mehr Bauraumanspruch und Kosten verursachen würden.

Erfindungsgemäß wird das Problem mit einer intelligenten Kühlungsstrategie "Vorkühlung" gelöst. Diese gezielte Vorkühlung kühlt die Batterie auf ein niedrigeres T-Level, wenn eine Lastspitze vorhergesagt wird oder ein Kühlungsmodul mit mehr als maximaler Kühlleistung identifiziert wird. Die Vorkühlung verändert den Temperaturanstieg ΔT nicht, da die gleiche maximale Kühlleistung genutzt wird, senkt aber die Starttemperatur so, dass die Endtemparatur und somit die Erwärmung der Batterie insgesamt die maximale Betriebstemperatur nicht überschreitet lässt (die untere T-Kurve in Fig. 5).

Diese Kühlungsstrategie ist umso wichtiger, je mehr die Auslegung in "Downsitzing" und "cost down" geht.

Bei Kältemittelkühlung ist dabei zu beachten, dass die Batterie nicht zu stark abgekühlt wird, um die Leistungsfähigkeit der Batterie nicht zu beeinträchtigen.

Analog zur Vorkühlung ist in einer beispielhaften Ausführungsform vorgesehen, bei Bedarf auch eine Nachkühlung zu implementieren. Der Übergang ist fließend, da die Kühlung darauf aufgebaut ist, von einem Kühlmodul zum anderen überzugehen. Die Nachkühlung eines Kühlmoduls kann gleichzeitig als Vorkühlung für das nächste anstehende Kühlmodul genutzt werden.

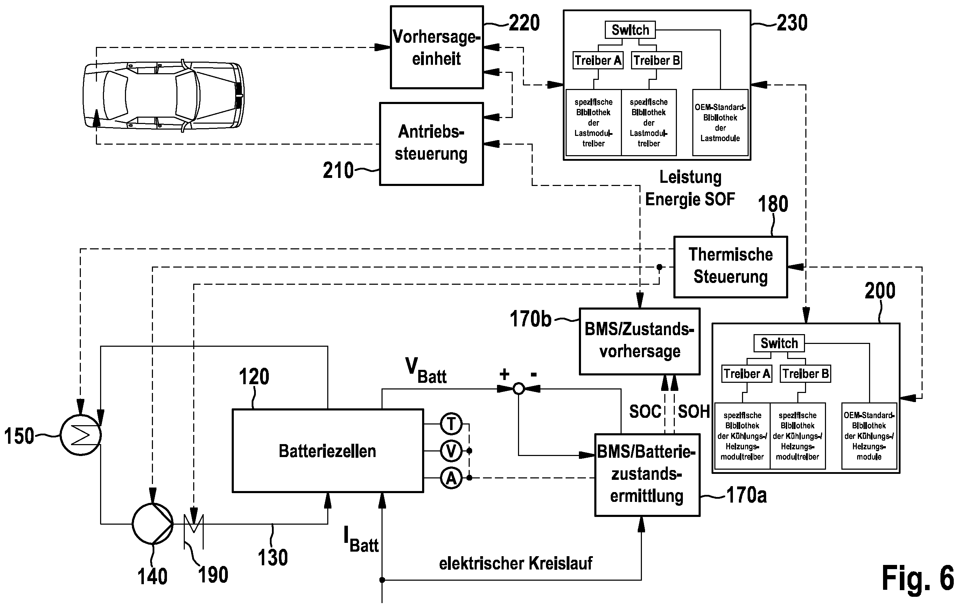

In Figur 6 soll die intelligente Betriebs- und TM-Regelungsstrategie für Fahrzeuge mit elektrischem Antrieb in einer Prinzipdarstellung beschrieben werden. Ein Li-Ionen-Batteriesystem, wie es bereits unter Verwendung von Figur 2 beschrieben wurde, ist ebenfalls Teil des erweiterten Systems zur Realisierung der intelligenten Betriebs- und TM-Regelungsstrategie. Erweitert wird das Li-Ionen-Batteriesystem durch eine Steuereinheit 180 für das Temperaturmanagement. Die Steuereinheit 180 für das Temperaturmanagement ist einerseits mit der Einheit 170 zur Vorhersage des Batteriezustandes verbunden und andererseits mit den Steuerorganen des Kühlwasserkreislauf 130, wobei die Steuerorgane in dieser beispielhaften Ausführungsform außerdem eine Heizung 190 (beispielsweise für die Vorheizung) umfassen. Darüber hinaus ist die Steuereinheit 180 für das Temperaturmanagement außerdem mit einer Bibliothek 200 verbunden, welche nutzerspezifische Kühlungs- bzw. Heizungsmodule sowie Kühlungs- bzw. Heizungsmodule der Originalhersteller (OEM) umfasst. Diese Kühlungs- bzw. Heizungsmodule umfassen die erwähnten modularen Temperaturregelungsalgorithmen, wie Kühlungs- oder Heizungsregelungsalgorithmen, welche somit für eine nutzerangepasste Temperaturregelung genutzt werden können. Des weiteren ist die Einheit 170 zur Vorhersage des Batteriezustandes mit einer Steuereinheit 210 für den Antrieb verbunden.

Das System zur Realisierung der intelligenten Betriebs- und TM-Regelungsstrategie umfasst in dieser beispielhaften Ausführungsform weiter eine Vorhersageeinheit 220, welche mit einer Bibliothek 230 verbunden ist, welche die obenerwähnten Lastmodule umfasst. Auch in dieser Bibliothek 230 sind nutzerspezifische und Herstellermodule abgelegt. Da zumindest einem Teil der Lastmodule korrespondierende Kühlungs- und/oder Heizungsmodule zugeordnet sind, ist die Bibliothek 230 der Lastmodule mit der Bibliothek 200 verbunden, welche die nutzer- und herstellerspezifischen Kühlungs- bzw. Heizungsmodule umfasst.

## Patentansprüche

1. Verfahren zum Betrieb von Fahrzeugen mit elektrischem Antrieb,
wobei der elektrische Antrieb mit einer von einer zurückzulegenden Fahrtstrecke abhängigen Regelungsstrategie betrieben wird,
wobei der Betrieb ein Temperaturmanagement mindestens eines Energiespeichers des Fahrzeugs umfasst,
wobei das Temperaturmanagement in Abhängigkeit von der Fahrtstrecke zugeordneten Lastprofilen erfolgt, **dadurch gekennzeichnet, dass** Fahrinformationen, insbesondere die zurückgelegte Fahrtstrecke, Fahrdynamik, Dauer, erfasst und abgespeichert werden, und aus den erfassten Fahrinformationen Fahrprofile gewonnen und anhand der Fahrprofile Lastprofile erstellt werden, wobei die Lastprofile angeben, welche Antriebsenergie zu welchem Zeitpunkt bereitgestellt werden muss.

2. Verfahren nach Anspruch 1, **dadurch gekennzeichnet, dass** die Fahrprofile als fahrerspezifische Fahrprofile gewonnen werden.

3. Verfahren nach Anspruch 1 oder 2, **dadurch gekennzeichnet, dass** eine durch Zieleingabe in ein Navigationssystem gewonnene Fahrtstrecke mit Fahrgewohnheiten des Fahrers simuliert und der Fahrtstrecke ein kundenspezifisches Lastprofil zugeordnet wird.

4. Verfahren nach einem der voranstehenden Ansprüche, **dadurch gekennzeichnet, dass** Lastprofile für vorgebbare Lastblöcke bereitgestellt werden, wobei ein Lastblock eine spezifische Fahrsituation, insbesondere Start, Überholen, Bremsen, Stopp & Go ., beschreibt, und das Lastprofil der Fahrtstrecke zumindest teilweise aus Lastprofilen der Lastblöcke zusammengestellt wird.

5. Verfahren nach Anspruch 4, **dadurch gekennzeichnet, dass** auf einzelne Lastblöcke abgestimmte Temperaturregelungsalgorithmen bereitgestellt werden.

6. Verfahren nach einem der voranstehenden Ansprüche, **dadurch gekennzeichnet**, das Temperaturmanagement eine Vor- und/oder Nachkühlung umfasst.

7. Anordnung mit mindestens einem Chip und/oder Prozessor, wobei die Anordnung derart eingerichtet ist, dass ein Verfahren zum Betrieb von Fahrzeugen mit elektrischem Antrieb gemäß einem der Ansprüche 1 bis 6 ausführbar ist.

8. Computerprogramm, das es einer Datenverarbeitungseinrichtung ermöglicht, nachdem es in Speichermittel der Datenverarbeitungseinrichtung geladen worden ist, ein Verfahren zum Betrieb von Fahrzeugen mit elektrischem Antrieb gemäß einem der Ansprüche 1 bis 6 durchzuführen.

9. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Betrieb von Fahrzeugen mit elektrischem Antrieb gemäß einem der Ansprüche 1 bis 6 durchzuführen.

10. Verfahren, bei dem ein Computerprogramm nach Anspruch 8 aus einem elektronischen Datennetz, wie beispielsweise aus dem Internet, auf eine an das Datennetz angeschlossene Datenverarbeitungseinrichtung heruntergeladen wird.

## Claims

1. Method for operating vehicles with an electric drive,
wherein the electric drive is operated with a control strategy which is dependent on a route which is to be travelled,
wherein the operation comprises temperature management of at least one energy store of the vehicle,
wherein the temperature management is performed depending on load profiles which are assigned to the route, **characterized in that**
driving information, in particular the route travelled, driving dynamics and duration, are detected and stored, and driving profiles are obtained from the detected driving information and load profiles are created on the basis of the driving profiles, wherein the load profiles indicate which drive energy has to be provided at which time.

2. Method according to Claim 1, **characterized in that** the driving profiles are obtained as driver-specific driving profiles.

3. Method according to Claim 1 or 2, **characterized in that** a route which is obtained by destination entry into a navigation system is simulated with driving habits of the driver and a customer-specific load profile is assigned to the route.

4. Method according to one of the preceding claims, **characterized in that** load profiles are provided for prespecifiable load blocks, wherein a load block describes a specific driving situation, in particular starting, overtaking, braking and stop-and-go, and the load profile of the route is at least partially compiled from load profiles of the load blocks.

5. Method according to Claim 4, **characterized in that** temperature control algorithms which are matched to individual load blocks are provided.

6. Method according to one of the preceding claims, **characterized in that** the temperature management comprises pre-cooling and/or post-cooling.

7. Arrangement comprising at least one chip and/or processor, wherein the arrangement is designed in such a way that a method for operating vehicles with an electric drive according to one of Claims 1 to 6 can be executed.

8. Computer program which allows a data processing device, after the said computer program has been loaded into storage means of the data processing device, to carry out a method for operating vehicles with an electric drive according to one of Claims 1 to 6.

9. Computer-readable storage medium in which a program is stored, which program allows a data processing device, after the said program has been loaded into storage means of the data processing device, to carry out a method for operating vehicles with an electric drive according to one of Claims 1 to 6.

10. Method in which a computer program according to Claim 8 is downloaded from an electronic data network, such as from the Internet for example, to a data processing device which is connected to the data network.

## Revendications

1. Procédé pour faire fonctionner des véhicules équipés d'un mécanisme de propulsion électrique,
le mécanisme de propulsion électrique fonctionnant avec une stratégie de régulation dépendante d'un trajet parcouru,
le fonctionnement comprenant une gestion de température d'au moins un accumulateur d'énergie du véhicule,
la gestion de température s'effectuant en fonction de profils de charge associés au trajet, **caractérisé en ce que**
des informations de conduite, notamment le trajet parcouru, la dynamique de conduite, la durée, sont acquises et mémorisées, et des profils de conduite sont obtenus à partir des informations de conduite acquises et des profils de charge sont créés à l'aide des profils de conduite, les profils de charge indiquant quelle énergie motrice doit être fournie à quel moment.

2. Procédé selon la revendication 1, **caractérisé en ce que** les profils de conduite sont obtenus en tant que profils de conduite spécifiques à un conducteur.

3. Procédé selon la revendication 1 ou 2, **caractérisé en ce qu'**un trajet obtenu par la saisie d'une destination dans un système de navigation est simulé avec les habitudes de conduite du conducteur et le trajet est associé à un profil de charge spécifique au client.

4. Procédé selon l'une des revendications précédentes, **caractérisé en ce que** des profils de charge sont fournis pour des blocs de charge pouvant être prédéfinis, un bloc de charge décrivant une situation de conduite spécifique, notamment un démarrage, un dépassement, un freinage, un arrêt/redémarrage, et le profil de charge du trajet étant au moins partiellement constitué des profils de charge des blocs de charge.

5. Procédé selon la revendication 4, **caractérisé en ce que** des algorithmes de régulation de température accordés sur les blocs de charge individuels sont fournis.

6. Procédé selon l'une des revendications précédentes, **caractérisé en ce que** la gestion de température comporte un pré- et/ou un post-refroidissement.

7. Arrangement comprenant au moins une puce et/ou un processeur, l'arrangement étant conçu de telle sorte qu'un procédé pour faire fonctionner des véhicules équipés d'un mécanisme de propulsion électrique selon l'une des revendications 1 à 6 peut être mis en œuvre.

8. Programme informatique qui permet à un dispositif de traitement de données, après qu'il a été chargé dans des moyens de mémorisation du dispositif de traitement de données, de mettre en œuvre un procédé pour faire fonctionner des véhicules équipés d'un mécanisme de propulsion électrique selon l'une des revendications 1 à 6.

9. Support d'enregistrement lisible par ordinateur sur lequel est enregistré un programme qui permet à un dispositif de traitement de données, après qu'il a été chargé dans des moyens de mémorisation du dispositif de traitement de données, de mettre en œuvre un procédé pour faire fonctionner des véhicules équipés d'un mécanisme de propulsion électrique selon l'une des revendications 1 à 6.

10. Procédé, avec lequel un programme informatique selon la revendication 8 est téléchargé depuis un réseau de données électronique, comme par exemple depuis l'Internet, sur un dispositif de traitement de données connecté au réseau de données.
